# FASCICULE DE BREVET EUROPEEN

(11) **EP 3 877 905 B1**
(45) Date de publication et mention de la délivrance du brevet: **01.07.2026**
(21) Numéro de dépôt: 19794153.7
(22) Date de dépôt: 28.10.2019
(51) Int. Cl.: G06V 10/147, G06V 10/36

(54) **CAPTEUR D'IMAGE POUR LA RECONNAISSANCE OPTIQUE DE CODE(S)**
BILDSENSOR ZUR OPTISCHEN CODE-ERKENNUNG
IMAGE SENSOR FOR OPTICAL CODE RECOGNITION

(30) Priorité: 06.11.2018 FR 1860214
(43) Date de publication de la demande: 15.09.2021
(73) Titulaire: Teledyne E2V Semiconductors SAS, 38120 Saint-Egrève (FR)
(72) Inventeur: DIASPARRA, Bruno, 38180 Seyssins (FR); LIGOZAT, Thierry, 38950 Quaix En Chartreuse (FR); GUIGUET, Romain, 38000 Grenoble (FR); POWELL, Gareth, 38410 St Martin Duriage (FR); VANRUMBEKE, Jérôme, 38590 St-Etienne-de-St-Geoirs (FR); FOUCHER, Arnaud, 38240 Meylan (FR)
(74) Mandataire: HGF
(86) Numéro de dépôt international: PCT/EP2019/079357
(87) Numéro de publication internationale: WO 2020/094441

(56) Documents cités:
- US-A1- 2005 103 846
- US-B1- 6 276 605
- KATONA M ET AL: "A Novel Method for Accurate and Efficient Barcode Detection with Morphological Operations", SIGNAL IMAGE TECHNOLOGY AND INTERNET BASED SYSTEMS (SITIS), 2012 EIGHTH INTERNATIONAL CONFERENCE ON, IEEE, 25 November 2012 (2012-11-25), pages 307 - 314, XP032348530, ISBN: 978-1-4673-5152-2, DOI: 10.1109/SITIS.2012.53

## Description

### DOMAINE TECHNIQUE

La présente invention concerne les capteurs d'image matriciels de type CMOS, à pixels actifs (structure de pixel à élément photosensible et transistors de commande) utilisés dans les dispositifs de reconnaissance optique de codes. Il y a les codes-barres qui sont des codes symboliques, linéaires (code barre 1D) ou matriciels (QR code, Data Matrix, Aztec, ...etc.). Ces codes sont par exemple imprimés (étiquettes, billets, affiches) ou gravés sur des produits industriels ou de grande distribution, des produits médicaux ou de laboratoire, ou des livres, ou ils s'affichent comme une image sur un Smartphone par exemple (code électronique). Ils sont utilisés pour des applications aussi variées que la traçabilité (fabrication, distribution, soins de santé), la vente, la gestion de stock, la billetterie (transports, musées) et plus généralement l'accès à des services payants, ou encore le renvoi vers des contenus enrichis (pages de site web). Le code à reconnaître peut aussi être une chaîne(s) alphanumérique(s), imprimée ou gravée sur un document papier ou une plaque (plaque d'immatriculation), et les applications concernées sont notamment la gestion d'accès sécurisée et/ou payante à des services, comme par exemple, la reconnaissance de plaques minéralogiques au passage de péages routiers, ou l'accès à des parkings automobiles.

### ETAT DE LA TECHNIQUE

Un système de reconnaissance optique de code assure deux fonctions : la capture d'image et la reconnaissance ou lecture de code(s), par traitement numérique de l'image, qui lui permet d'associer le code reconnu à un produit, un contenu informatif, un service, ...etc.
La capture d'image est réalisée par un capteur d'image intégré dans un lecteur (lecteur de code) qui intègre aussi le système d'éclairage (une source lumineuse telle que des leds et/ou un laser, associée à un ensemble optique (miroirs, lentilles) et une électronique de commande qui, sur activation externe (par un moyen mécanique tel qu'un bouton ou une gâchette, ou électronique, tel qu'un système de détection de présence), commande l'éclairage de l'objet cible et déclenche la prise d'image par le capteur. Un viseur laser peut aussi être prévu (mire de centrage). Chaque image est transmise à un système externe de traitement numérique qui analyse l'image pour détecter (localiser) et reconnaître (décoder) le ou les codes contenus dans l'image, par des logiciels de traitement numérique adaptés, et déclencher les fonctions applicatives associées. Ce système doit être capable de reconnaître le ou les codes rapidement, et utilise pour cela des ressources matérielles d'analyse d'image (mémoires, micro-processeurs DSP), pour mettre en œuvre différents algorithmes complexes de traitement d'image, pour la localisation, la recherche de type de code (critères géométriques), la réorientation dans une direction de déchiffrage, le déchiffrage.

Plusieurs images peuvent être nécessaires pour cela, selon la qualité d'image, notamment en fonction du contraste : le système déclenche alors le lecteur, en changeant des paramètres de capture d'image tels que temps d'exposition, éclairage, gain. Avec un capteur d'image CMOS, à pixels actifs, le système de traitement peut aussi spécifier une ou des régions d'intérêt, permettant de limiter l'acquisition des données d'images à ces régions particulières.

Une qualité essentielle des systèmes de reconnaissance d'optique de code, c'est leur vitesse de traitement. Cette vitesse de traitement est dépendante de la qualité d'image, qui peut être variable en fonction du contexte de prise d'image (éclairage, temps d'exposition), de l'objet cible lui-même (qualités du support : planéité, qualité de réflexion, rayures ou autres), et de la position relative de l'objet face à la caméra de capteur. Le contraste d'image peut être amélioré par traitement numérique (rehaussement) ou en commandant une nouvelle capture d'image utilisant plus, ou moins, de puissance d'éclairage. On peut aussi ajuster le temps d'exposition, pour avoir un meilleur histogramme d'image (courbe de densité des niveaux de gris dans l'image), et/ou le gain de conversion.

Mais la vitesse de traitement dépend aussi de la quantité de données numérique à traiter, c'est-à-dire de la taille de l'image de capture.

Or une tendance actuelle est à utiliser des capteurs d'image CMOS de grande résolution, ce qui permet notamment de relâcher les contraintes de distance de capture (distance entre le plan de capture du capteur et l'objet cible) et à grande dynamique de codage, par exemple 8, 10 ou 12 bits. On utilise ainsi des capteurs d'image qui fournissent en sortie des images de quelques Mégabits de données.

Un inconvénient à cela, est que cela impacte directement les systèmes de traitement numérique, tant dans le dimensionnement (et la consommation) des ressources matérielles (puissance de calcul et capacité mémoire) que dans le temps de traitement.

Les documents

US 6 276 605 B1 (OLMSTEAD BRYAN L [US] ET AL) 21 août 2001 et

US 2005/103846 A1 (ZHU XIAOXUN [US] ET AL) 19 mai 2005

représentent l'état de la technique.

### RESUME DE L'INVENTION

Un objet de l'invention est d'améliorer les performances des systèmes de reconnaissance optique de code(s), notamment pour réduire leur consommation (puissance de calcul, mémoire) et améliorer leur temps de réponse. Une façon d'améliorer cela est de permettre à ces systèmes de se focaliser sur l'information utile de l'image de capture qui est transmise. Cette information utile (le ou les codes) correspond à une petite fraction de l'image de capture, c'est-à-dire à une ou des régions d'intérêt dans l'image. On peut alors focaliser la puissance de calcul sur ces régions.

On a ainsi cherché à résoudre la problématique technique suivante : intégrer dans le capteur d'image des fonctions permettant de fournir en sortie, en plus des données d'image de capture, des données supplémentaires, qui seraient des informations de localisation de code(s), avec un indice de confiance suffisant (données fiables) ; et le faire à moindre coût sur le capteur, c'est-à-dire sans impacter le temps trame de fourniture d'image et sans impacter la taille du capteur (compacité - intégration sur la puce de capteur).

Une caractéristique commune des codes, est que leur image contient beaucoup d'information haute fréquence spatiale (contrastes noir/blanc), dans une direction ou plusieurs directions selon les codes et leur orientation dans l'image, au contraire de la zone d'image autour d'un code. C'est cette caractéristique qui est d'ailleurs exploitée dans les algorithmes de détection de contour utilisés pour la reconnaissance.

Dans l'invention on propose de faire une extraction d'information haute fréquence, ou plus généralement d'une information représentant une caractéristique spatiale de code, dans le capteur d'image lui-même, par le calcul d'au moins un résultat de convolution en chaque point d'image de capture, l'amplitude de ce résultat (sa valeur absolue), et un seuillage binaire, permettant de séparer l'information recherchée du bruit dans l'image, pour obtenir une information dont la valeur 0 ou 1 est une information de localisation du code : la valeur 1 veut dire que le pixel est potentiellement dans une zone de code.

Dans un exemple, le calcul de convolution est un calcul de gradient et ce qui nous intéresse, c'est l'amplitude de ce gradient (donc sa valeur absolue), comme indicative d'information de localisation.

Il s'agit de faire l'extraction de cette information dans le capteur lui-même, à moindre coût. Notamment, cela ne doit pas affecter la vitesse d'acquisition et de transmission des données d'image de capture. C'est-à-dire que l'extraction doit être faite dans le temps d'acquisition de l'image de capture, et les données porteuses d'information de localisation doivent être intégrées dans la trame de transmission de l'image de capture, vers le système externe de reconnaissance de code. Cela ne doit pas non plus nécessiter de ressources matérielles conséquentes, telles que des mémoires d'image ou des processeurs dédiés complexes. On doit pouvoir intégrer les ressources matérielles nécessaires à la réalisation de cette fonction d'extraction sur la puce même de circuit intégré de capteur d'image CMOS, avantageusement d'une façon programmable ou paramétrable, permettant une adaptation facile (flexibilité) aux différents codes et systèmes applicatifs de reconnaissance optique. Enfin l'information extraite et transmise doit avoir une grande fiabilité, pour permettre son utilisation directe par le système de reconnaissance externe, permettant d'optimiser sa puissance de calcul et d'améliorer sa vitesse de traitement.

La solution à ces différentes contraintes techniques est apportée dans l'invention par un capteur d'image CMOS intégrant un bloc de traitement numérique qui pour chaque prise d'image de capture, est synchronisé sur le signal de sélection de ligne (lecture) dans la matrice de pixel, et configuré pour calculer une macro-image, dans le temps d'acquisition de l'information par les pixels (temps d'exposition des pixels, et lecture séquentielle ligne par ligne), pour la fournir en pied de trame d'image de capture, à la suite des données d'image de capture. Chaque point de la macro- image correspond à un pavé de points de l'image de capture et la valeur de chaque point de la macro-image est une information indicative de localisation de code dans le pavé de points correspondant dans l'image de capture.

Les aspects de la présente invention sont définis dans les revendications qui l'accompagnent.

D'autres caractéristiques, détails et avantages de l'invention ressortiront à la lecture de la description suivante, faite en référence aux dessins annexés à titre d'exemple et qui représentent respectivement :
- la figure 1 , un schéma-bloc fonctionnel d'un capteur d'image CMOS conforme à l'invention ;
- la figure 2, un chronogramme des signaux d'horloge et de données d'une trame d'image de capture selon l'art antérieur ;
- la figure 3, un chronogramme des signaux d'horloge et de données d'une trame d'image de capture incluant l'extraction et la transmission dans cette trame de données complémentaires, dans le pied de trame, selon l'invention ;
- la figure 4, un organigramme détaillant les différentes étapes d'extraction par calcul des données complémentaires, au fur et à mesure de l'acquisition des données d'image de capture, et montrant une simulation des images correspondant aux données extraites et calculées aux différentes étapes ;
- la figure 5, un schéma explicatif de la première étape de calcul en chacun des points d'image de capture ;
- la figure 6, un schéma explicatif de la deuxième étape de calcul, pour former une macro-image selon l'invention ;
- la figure 7, un schéma illustrant une étape supplémentaire utilisant des opérateurs morphologiques, pour augmenter l'indice de confiance sur les données d'une macro-image binaire ; et
- la figure 8, un schéma mettant en évidence la relation entre la taille de pavé de pixels utilisé pour former une macro- image selon l'invention et la taille de code(s) à détecter dans l'image.

### DESCRIPTION DETAILLEE

Un lecteur de code comprend un capteur d'image CMOS, une source de lumière pour éclairer une cible (un ou des codes apposés sur un objet, une plaque minéralogique ...) à travers une fenêtre de numérisation ; et un système optique qui permet de renvoyer la lumière réfléchie par la cible sur la matrice de pixels du capteur. La source lumineuse est généralement à base de diodes LEDs pour éclairer la cible pour la prise d'image, par flash. Certains systèmes peuvent en outre intégrer une source laser associée à une optique diffractive, dans le but d'aider l'opérateur à centrer le code cible préalablement à la prise d'image, par projection d'un motif particulier (croix, angles,...etc.). Cette opération est connue sous le terme anglo-saxon *"aimer".* Cette source laser est normalement éteinte, avant le flash des LEDs pour la prise d'image. La prise d'image par le lecteur est déclenchée par un mécanisme électronique ou manuel : le lecteur sort d'un mode de veille (basse consommation) et active la source de lumière et le capteur, pour faire la prise d'image et la transmettre à un système externe de reconnaissance de code externe au capteur.

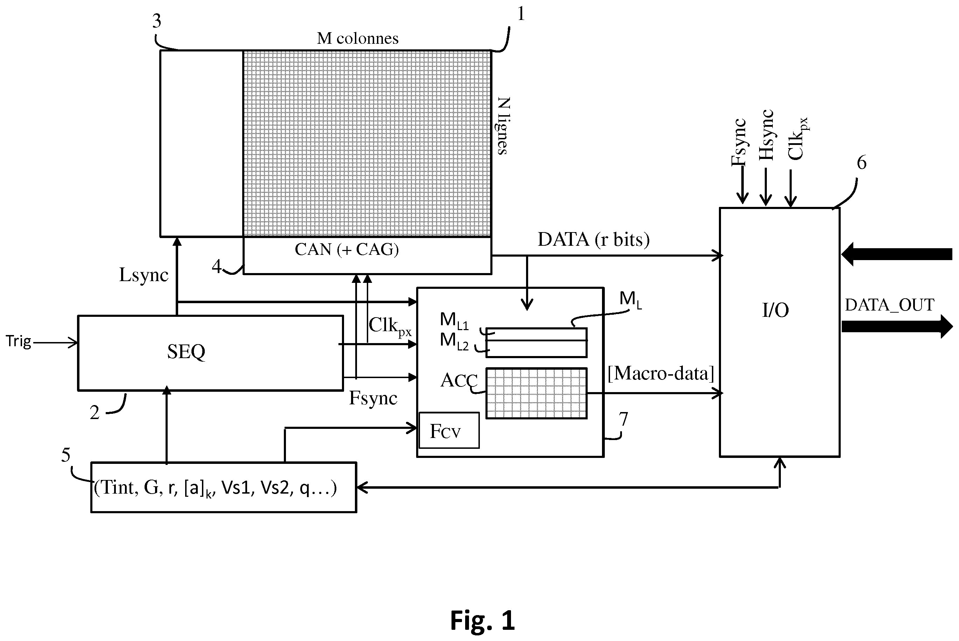

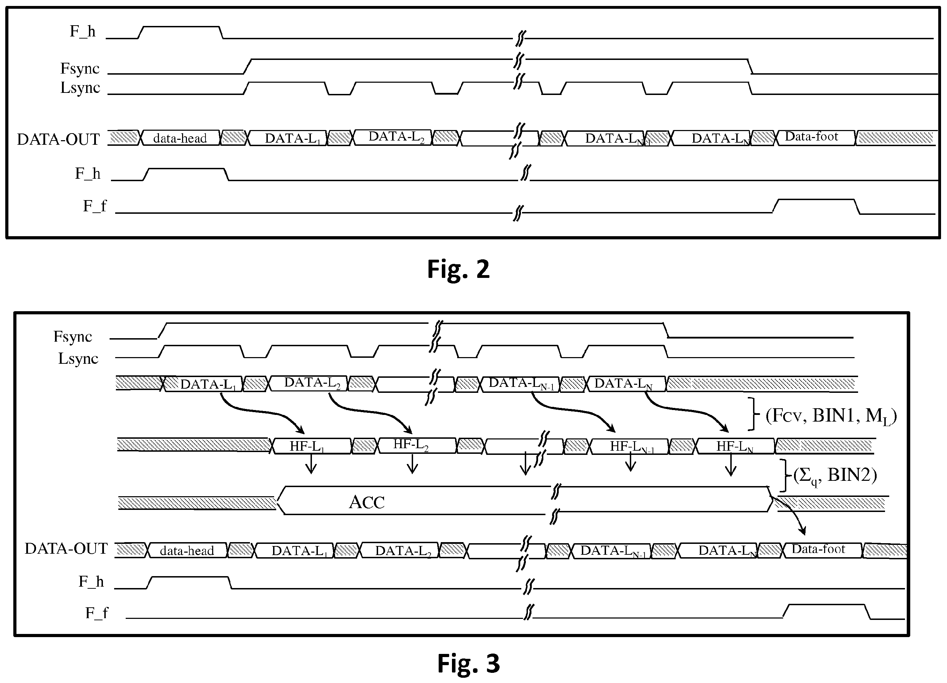

Le capteur d'image CMOS comprend classiquement, comme représenté à la figure 1, une matrice 1 de pixels comprenant N lignes et M colonnes (N, M entiers). Les signaux de commande des transistors des pixels, sont générés par un circuit 2 de contrôle (noté SEQ) qui est activé par le signal de déclenchement Trig de lecture de code. Ces signaux de commande des pixels servent à contrôler le temps d'exposition des pixels, de manière globale ("Snapshot"), ou défilante, ligne par ligne ("rolling shutter"), puis la lecture séquentielle ligne par ligne. Notamment, le circuit SEQ fournit un signal de synchronisation horizontale Lsync vers le circuit 3 de sélection des lignes de pixel, pour cadencer la lecture séquentielle des lignes de pixels, par le circuit de lecture. Le circuit de lecture comprend une chaîne de conversion analogique numérique (CAN), généralement associée à un étage de contrôle de gain (CAG), et les M valeurs numériques lues pour la ligne de pixels courante sélectionnée en lecture sont délivrées en sortie à la cadence d'horloge Clkₚₓ, pendant la période d'activation ligne (Lsync) correspondante. C'est ainsi que comme illustré sur la figure 2, pendant chaque impulsion Lsync correspondant à une sélection de ligne de pixels Lᵢ, le circuit de lecture délivre en sortie les M données numériques correspondantes, successivement, par exemple dans l'ordre de rang croissant des colonnes. On désigne par DATA-Lᵢ les M données lues sur la ligne de pixel de rang i (i entier égal 1 à N). La succession des N DATA-Lᵢ forme le flux DATA de données d'image de capture qui est transmis au circuit 6 d'interface I/O du capteur, pour constituer la trame d'image de capture correspondante DATA-OUT fournie vers un système externe de reconnaissance de code (non représenté).

Une constitution classique de la trame d'image de capture est illustrée sur la figure 2. On a représenté le signal de synchronisation trame FSync, dont l'activation marque le début de la phase de lecture des N lignes d'image, et qui reste actif jusqu'à la fin de cette phase de lecture. A chaque période d'activation Lsync, on a un flux de donnée DATA-Lᵢ correspondant.

La trame de données d'image transmises au système de reconnaissance externe comprend en pratique un entête (header) et un pied (footer) de trame qui encadrent le flux de données des N lignes d'image. Dans l'entête, on vient notamment mettre des informations comme la quantité de données de l'image (taille d'image). On peut en effet effectuer une capture d'image complète, ou seulement dans des régions d'intérêt. On vient généralement mettre également les valeurs des paramètres de capture de l'image qui vient d'être prise. Il s'agit notamment de la durée Tint de temps d'exposition, de la dynamique de codage (nombre de niveaux de gris codés), du gain de conversion. Ces valeurs sont fournies par un registre 5 de paramètres du capteur (figure 1), pendant un temps d'activation d'un signal correspondant, F-h, avant l'activation du signal de synchronisation trame Fsync. On transmet ces valeurs car elles sont utiles pour exploiter l'image et juger des conditions de la prise d'image. Cela permet notamment au système externe de commander une nouvelle prise d'image avec des valeurs différentes, si l'image reçue n'est pas bonne, par exemple sous exposée, ou sur exposée. Dans le pied de page, on va généralement transmettre des données calculées sur l'image, par exemple des histogrammes calculés sur tout ou partie de l'image. Ces histogrammes permettent notamment de juger de la bonne exposition d'une image.

La taille (nombre de bits) de l'entête et du pied de trame est petite devant la taille du corps de trame réservé aux données d'image proprement dite. Dans un exemple, on dispose pour l'entête ou le pied de page d'un nombre de bits qui correspond au nombre de bits des données d'une ligne d'image.

Ces rappels généraux étant faits, nous allons pouvoir décrire le perfectionnement de capteur d'image CMOS pour lecteur de code barre proposé dans l'invention.

Selon l'invention, un capteur d'image CMOS intègre des moyens de calcul qui permettent d'extraire sur les données d'image, des données qui correspondent à des informations de présence ou de localisation de(s) code(s ) dans l'image, de façon fiable. Ces informations sont fournies de façon complémentaire au système externe de reconnaissance dans le pied de trame d'image, pour lui permettre de focaliser sa puissance de calcul et de mémoire sur les données d'image de capture dans des zones d'image qu'il peut identifier grâce à ces données complémentaires.

Le capteur d'image comprend ainsi des moyens 7 de traitement numérique (Figure 1) qui sont configurés pour calculer une petite image ou macro-image, qui est une image dont chaque point correspond à un pavé de points de l'image de capture ; et la valeur de chaque point de macro-image est une indication de présence/localisation de code dans la portion d'image de capture correspondante (le pavé de points).

De manière conventionnelle, les capteurs comportent généralement des moyens de traitement numérique qui utilisent des opérateurs de calcul élémentaires (additionneurs, multiplicateurs, diviseurs, comparateurs), qui sont par exemple utilisés pour calculer des histogrammes. Les calculs d'histogrammes sont utiles au capteur pour lui permettre d'adapter le temps d'exposition des pixels, défini à une valeur par défaut pour une application donnée, lorsque l'histogramme montre que l'image est sur ou sous exposée. Le capteur peut aussi adapter le gain de conversion dans la chaîne de lecture, pour augmenter le contraste. Le calcul de macro-image selon l'invention utilise ces mêmes opérateurs élémentaires, peu encombrants et simples à intégrer sur la puce de capteur, pour calculer la valeur de chaque point de macro-image à partir des données d'image de capture, au fur et à mesure de leur acquisition, par calcul de filtres représentatifs d'une caractéristique spatiale des codes. Ce circuit 7 comprend (figure 1) une mémoire de lignes M_{L} temporaire de profondeur limitée (nombre de lignes), adaptée à la taille des masques de(s) filtre(s). Cette mémoire de ligne conserve les données des lignes de pixels lues juste avant la ligne de lecture courante. Les tailles habituelles des masques sont 3x3 et 5x5. Pour un masque 3x3 par exemple, deux lignes de mémoire sont suffisantes pour faire les calculs de filtre à la volée sur chaque pixel. Dans tous les cas, la mémoire de lignes a une profondeur de moins d'une dizaine de lignes, ce qui est facilement intégrable sur la puce de capteur. Le circuit de traitement numérique 7 comprend aussi des moyens Acc d'accumulation/mémorisation, pour accumuler au fur et à mesure de leur calcul, les données de points de macro- image. A la fin de la lecture de la matrice de pixels, ces moyens fournissent les données de macro-image Macro-data vers le circuit d'interface I/O. Au plan de la réalisation pratique, ces moyens Acc peuvent comprendre autant de registres d'accumulation que de points de macro-image à calculer. Mais on pourrait aussi avoir autant de registres que de points dans une ligne de macro-image, associés à une mémoire de macro-image, pour mémoriser au fur et à mesure du calcul à la volée, les valeurs des points de chaque ligne de macro-image. Dans la suite, pour simplifier, on parle d'un registre d'accumulation (Acc).

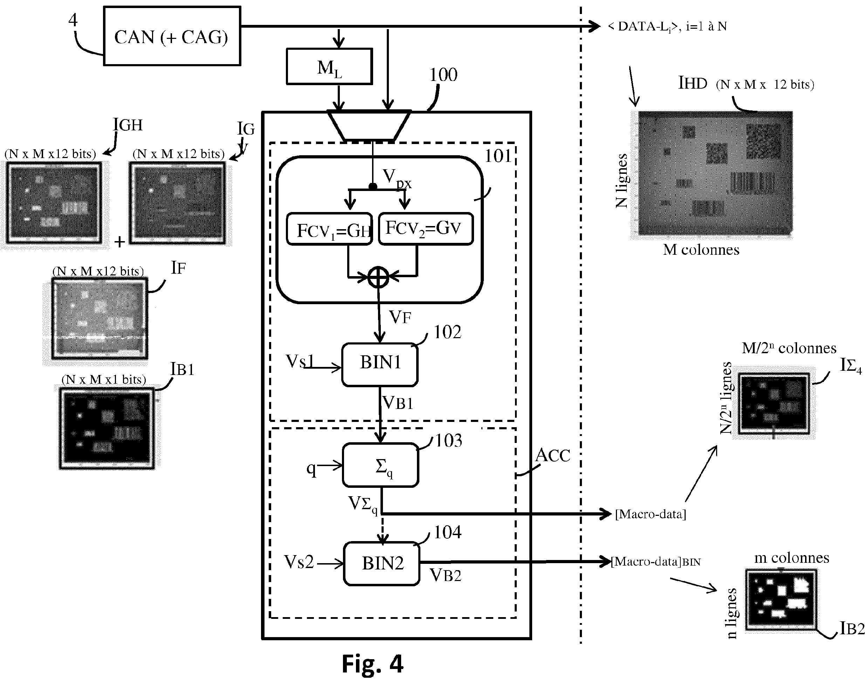

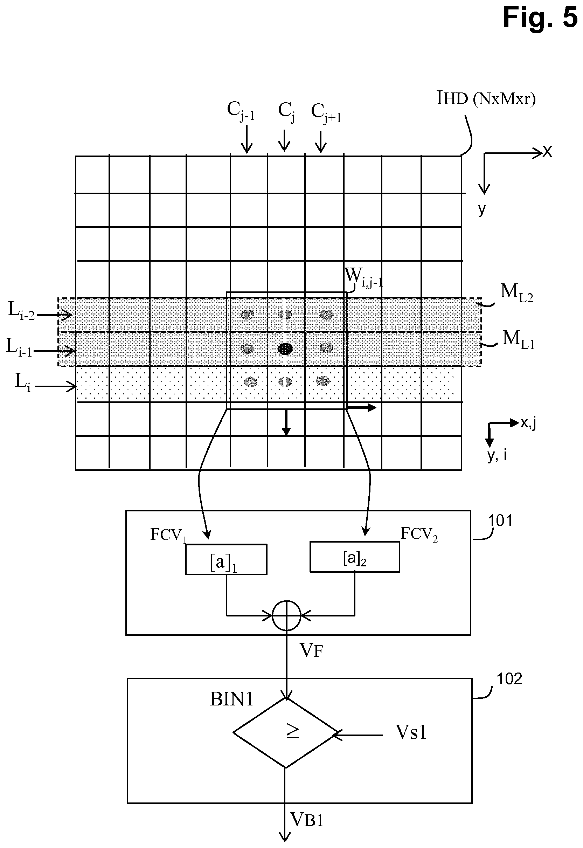

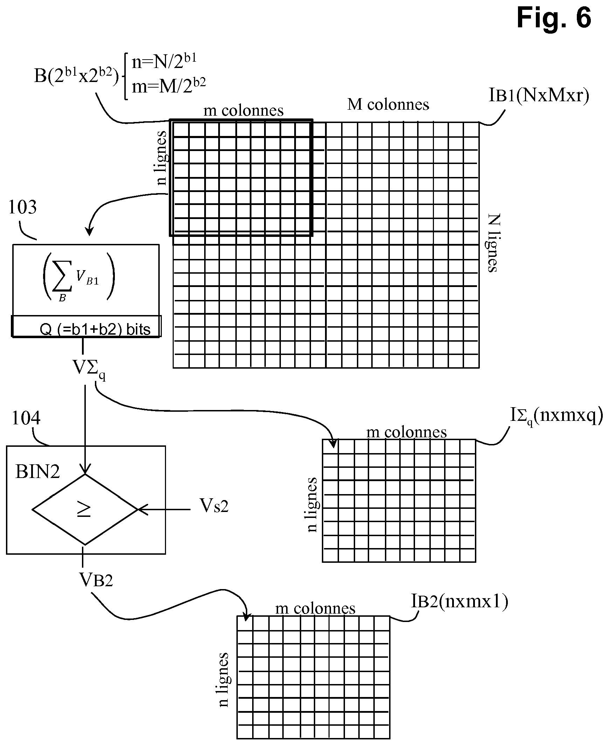

Le processus de calcul à la volée selon l'invention, pour l'extraction d'une signature numérique spatiale, mis en œuvre dans le circuit numérique 7, va maintenant être expliqué à l'aide du chronogramme de la figure 3, de l'organigramme de la figure 4 et des détails des étapes du processus de calcul illustrés sur les figures 5 et 6. Pour cette description, on choisit un processus de calcul 100 qui utilise des masque(s) de taille 3x3 pour le filtrage. Le processus de calcul 100 utilise deux lignes de mémoire notées M_{L1} et M_{L2} de la mémoire de ligne M_{L} (figure 1). Comme illustré de façon schématique sur la figure 5, en se plaçant dans le cas conventionnel d'une lecture séquentielle des N lignes de pixel par le même circuit de lecture en pied de colonnes (Figure 1), en commençant par la ligne de rang 1, L₁, jusqu'à la ligne de rang N, L_{N}, si la phase de lecture courante (Lsync) est celle de la ligne Lᵢ, la mémoire de ligne M_{L1} contient les données de lecture de la ligne Lᵢ₋₁ et la mémoire de ligne M_{L2} contient les données de lecture de la ligne Lᵢ₋₂. A la phase de lecture suivante (lecture de la ligne Lᵢ₊₁), les données de la ligne Lᵢ passent dans la mémoire de ligne M_{L1} qui "poussent" les données de la ligne Lᵢ₋₁ qu'elle contenait, dans la mémoire de ligne Lᵢ₋₂.

Egalement, on prend en exemple un processus qui permet l'extraction d'une signature haute fréquence de l'image de capture, dans le but d'obtenir une macro-image correspondante qui doit permettre d'identifier les régions de code(s) qui contiennent une grande densité d'alternances de noir et de blanc, ou de deux niveaux de gris très contrastés, dans au moins une direction, alors que le reste de l'image (dans le contexte applicatif considéré) en contient peu. C'est-à-dire que l'on s'attend à pouvoir identifier dans cette macro-image, des "boîtes" blanches, dont la taille pourrait correspondre à du code.

Pour cette extraction, on applique un calcul de gradient(s) dans au moins une direction, et on retient comme information, l'amplitude du gradient (c'est-à-dire la valeur absolue du gradient, sans s'intéresser au signe). De préférence, on applique un calcul de gradient dans au moins deux directions de manière à obtenir une valeur la plus grande possible en chaque point, par sommation de leur amplitude respective. En effet, les codes "capturés" dans l'image ne sont pas nécessairement alignés par rapport aux axes de la matrice de pixels. Ce sera souvent le cas dans les applications dans lesquelles le lecteur de code est fixe, et les objets à scanner arrivent sur un tapis défilant devant la caméra du lecteur. Egalement, certains codes ont une signature haute fréquence dans différentes directions, notamment les codes symboliques 2D et les chaînes alphanumériques. Il est intéressant pour permettre une localisation la plus fiable possible, d'obtenir une information haute fréquence en chaque point qui soit la plus complète (la plus grande).

Le processus de calcul 100 comprend ainsi une première étape 101 de calcul de filtre(s). Dans cette étape 101 (Figure 4), on applique dans l'exemple un premier filtre F_{CV₁}, correspondant à un gradient horizontal GH, utilisant un masque de convolution respectif [a]₁ (Figure 5) ; et un deuxième filtre F_{CV₂}, correspondant à un gradient vertical Gv, utilisant un masque de convolution respectif [a]₂. Le sens horizontal correspond de manière conventionnelle à la direction des lignes de pixels et le sens vertical, à celui des colonnes de pixels. Les deux calculs de filtres sont effectués en parallèle, à la volée, pour chaque point de l'image de capture au fur et à mesure de l'acquisition des données de ce point et des points voisins, à l'intérieur de la fenêtre de masque centrée sur le point d'image de capture concerné (fenêtre W_{i-1,j} pour le point d'image correspondant au pixel placé sur la ligne i-1 et la colonne j dans la matrice de pixels, Figure 5). On obtient deux valeurs correspondantes notées VGH et VGV, dont on somme les valeurs absolues (l'amplitude de gradient, sans considération du signe), pour obtenir une valeur VF qui est le résultat du calcul de filtrage réalisé à l'étape 101, et qui ici représente la quantité d'information haute fréquence en ce point, sans considération de la direction.

En pratique, le calcul est fait à la volée au fur et à mesure de la fourniture des données des pixels par le circuit de lecture, ligne par ligne. Pour chaque pixel, le résultat de calcul de chaque filtre (combinaison linéaire des coefficients de filtre avec les valeurs des points d'image dans la fenêtre de voisinage centrée sur le pixel) est obtenu après que le processus a pu avoir les valeurs numériques du pixel et de ses pixels voisins, définis par la fenêtre de masque centrée sur le pixel concerné. Si on prend la figure 5, on obtient les valeurs VGH, VGV et VF pour le pixel PX_{i-1,j} lorsque la ligne de sélection courante de lecture est la ligne Lᵢ.

On note Vₚₓ la valeur numérique d'un point d'image de capture, qui est la valeur fournie par le circuit de lecture 4, et qui représente la quantité de signal intégrée par un pixel correspondant dans la matrice pendant le temps d'exposition de prise d'image. Cette valeur est codée sur r bits, dans l'exemple (Figure 4), 12 bits. Les valeurs VGH, VGV et V_{F}, sont des valeurs codées sur ce même nombre de bits.

Sur la figure 4, on a représenté ce que pourrait être les images calculées correspondantes, si pour chacune on collectait toutes les données calculées dans une mémoire d'image respective (ce que l'on ne fait pas dans la réalité - il s'agit ici seulement de simulation) et qu'on les affichait, en prenant en exemple une image de capture d'un objet cible comportant plusieurs codes de type symbolique, 1D et 2D, de différentes tailles.

On voit ainsi l'image IHD correspondant à l'ensemble des données Vₚₓ (ensemble DATA formé des N DATA-Lᵢ). Et les images calculées correspondantes, de gradient horizontal (IGH), vertical (IGV) et d'information haute fréquence, non directionnelle, (IF), dans l'étape 101 du processus de calcul selon l'invention. Toutes ces images IHD, IGH, IGV et IF ont N lignes, M colonnes et une profondeur de 12 bits.

L'étape 102 suivante du processus de calcul, correspond à une binarisation de l'image haute fréquence obtenue, qui permet de séparer le bruit du signal haute fréquence de l'image. En améliorant le rapport signal sur bruit, on augmente l'indice de confiance sur l'information de localisation de code que l'on fournit en sortie du capteur. En pratique, la binarisation se fait comme précédemment, à la volée, sur chacune des valeurs VF sortant du processus de calcul de l'étape 101 de filtrage (Figures 4 et 5). Et elle consiste à comparer la valeur VF à un seuil de binarisation, Vs1. En pratique, on peut prévoir que cette valeur Vs1 est fournie au circuit de traitement numérique 7 par un registre de paramètres (5) du capteur et qu'elle est programmée à une valeur par défaut, qui correspond généralement à un niveau de gris moyen. La valeur de seuil par défaut (dans le registre) peut être modifiée par un utilisateur ou par le système de reconnaissance, par exemple en fonction des caractéristiques d'images de test obtenues dans le contexte applicatif (valeur moyenne des niveaux de gris calculées sur des images de test ou réelles). On peut aussi prévoir que le circuit de traitement numérique adapte cette valeur de seuil au fur et à mesure du calcul, sur la base des valeurs de niveaux de gris des données d'image de capture déjà traitées. Dans ce cas, la valeur de seuil utilisée n'est pas nécessairement constante sur la hauteur d'image.

On obtient une valeur binaire VB1 par point d'image de capture. L'image simulée correspondante IB1 comprend N lignes et M colonnes, sur une profondeur de 1 bit. A ce stade, on a des informations ponctuelles qui ne sont pas des informations de localisation de code. Il faut pouvoir relier ces informations pour constituer des informations signifiantes de localisation de code(s), prenant en compte la taille des codes susceptibles d'être présents dans l'image.

C'est la fonction des étapes suivantes 103 et 104, par laquelle on vient constituer la macro-image binaire de localisation de code(s) dans l'image de capture.

Ces étapes sont comme les autres, réalisées à la volée, au fur et à mesure de la réception des données nécessaires pour calculer la valeur de chaque point de la macro-image. De manière imagée, il s'agit ici de relier les informations entre elles pour essayer de constituer des "boîtes signifiantes", correspondant à des emplacements de code dans l'image, et d'une façon simple, par calcul à la volée, mais fiable, c'est-à-dire que l'information obtenue en sortie a un indice de confiance élevé.

Pour cela on procède en deux étapes qui sont détaillées sur la figure 6.

La première étape 103 correspond à un pavage, qui va permettre de faire correspondre à chaque pavé B de points de l'image de capture, un point de macro-image, pour lequel on calcule une valeur notée VΣ_{q} à partir des valeurs binaires VBIN1 des points du pavé B. Autrement dit, en se référant à la simulation d'image I_{B1}, on compte le nombre de points blancs dans le pavé concerné : la valeur VΣ_{q} est bien indicative de ce que le pavé B concerné pourrait correspondre à un emplacement de code dans l'image. Ce passage est réalisé par une opération d'accumulation Σ_{q} dans un élément de registre Acc correspondant au pavé traité, c'est-à-dire que l'on additionne au fur et à mesure de leur calcul à la volée (étapes 101 et 102), les valeurs binaires VBIN1 des points du pavé B concerné.

L'opération de pavage correspond à une division de l'image de capture par pavés de n=2^{b1} lignes et m=2^{b2} colonnes. Cela dimensionne l'élément de registre d'accumulation des valeurs binaires des nxm points d'un pavé : c'est un registre Q bits, avec Q=b1+b2.

On choisira de préférence un pavage carré, avec b1=b2, adapté à tous les codes et toutes les orientations. Par exemple si on prend b1=b2=6, on a alors 4096 points d'image de capture par pavé B et l'élément de registre d'accumulation Acc pour chaque pavé permet de compter de 0 (tous les points ont la valeur 0) à 4096 (tous les points ont la valeur 1).

Avantageusement, la valeur VΣ_{q} fournie en sortie pour chaque pavé, peut être une valeur tronquée ou non. L'indice q est un paramètre qui indique cela, et il a ainsi une valeur qui peut être égale à 1, 2, 3, ..., ou Q bits. Si q =4 par exemple, alors la valeur VΣ_{q} fournie en sortie pour chaque pavé, sera une valeur codée sur seulement 4 bits.

La macro-image correspondante IΣ_{q} (figure 4) comprend ainsi n lignes, m colonnes et a une profondeur de q bits.

Plus la valeur de q est grande, plus l'information de localisation contenue dans la macro-image sera riche.

Le choix des valeurs n, m et q dimensionne la taille de macro-image IΣ_{q}. Ainsi, en fonction de la taille de pavé, plus petit ou plus grand, on peut choisir une valeur q qui sera aussi plus petite (pour un pavé petit) ou plus grande (pour un pavé plus grand) de manière à obtenir une taille de macro-image (nombre de bits) permettant son calcul à la volée dans le temps d'acquisition d'une image de capture, et aussi son intégration dans le pied de trame. C'est-à-dire qu'il faut faire un compromis entre temps de traitement, dimension de macro-image et richesse de l'information.

La dimension du pavé (nombre de lignes et de colonnes) dépend d'abord du nombre de lignes et de colonnes de la matrice de pixel. Ensuite, elle ne doit pas être trop petite, pour obtenir le niveau de compression voulue (temps de calcul, intégration dans le pied de trame). Mais elle ne doit pas non plus être plus grande que la taille des codes dans l'image, sous peine de perdre l'information de localisation correspondante. On reviendra sur ces aspects plus loin.

Dans un exemple réaliste, pour une matrice de pixels de N= 1920 lignes et M= 2560 colonnes, on peut définir une taille de pavé de 64 lignes par 64 colonnes. On obtient une macro-image IΣ_{q} de n=30 lignes et m=40 colonnes. Si q =12 bits, la quantité de bits correspondante de macro-image est 14 400 bits. Si q = 8bits, elle est de 9600 bits et si q =4, elle est de 4800 bits. La taille de pavé est adaptée pour des codes dans l'image de taille supérieure, par exemple 100 sur 100 pixels.

Dans une variante, on veut fournir une macro-image binaire IB2 (Figures 4 et 6). On réalise alors de préférence une accumulation avec troncature dans l'étape 103, avec une valeur de q supérieure à 1 mais inférieure à Q. Par exemple on choisit q = 4 bis, pour binariser ensuite la valeur obtenue, par rapport à un nouveau seuil. L'opération de compression est de meilleure qualité. C'est l'étape 104 de binarisation BIN2 de la valeur VΣ_{q}, par rapport à un seuil Vs2, qui est illustrée sur les figures 4 et 6. Le seuil Vs2 peut comme Vs1, être fixé à une valeur fournie par le registre 5 de paramètres et définie en fonction du contexte applicatif, ou ajustée à partir de macro-images calculées sur des images de test ou réelles. On peut aussi envisager un calcul de niveau de gris moyen par portion de macro-image IΣ_{q}, définissant un niveau de seuil Vs2 adaptatif. On obtient une nouvelle valeur binaire VB2, pour chaque point de la macro-image binaire correspondante IB2, qui est une image en noir et blanc illustrée à la figure 4, qui montre des formes de "boîtes" blanches qui correspondent à l'emplacement des codes dans l'image de capture IHD.

On peut voir que ces formes ne sont pas "parfaites" avec des bords crantés, ou des petites excroissances.

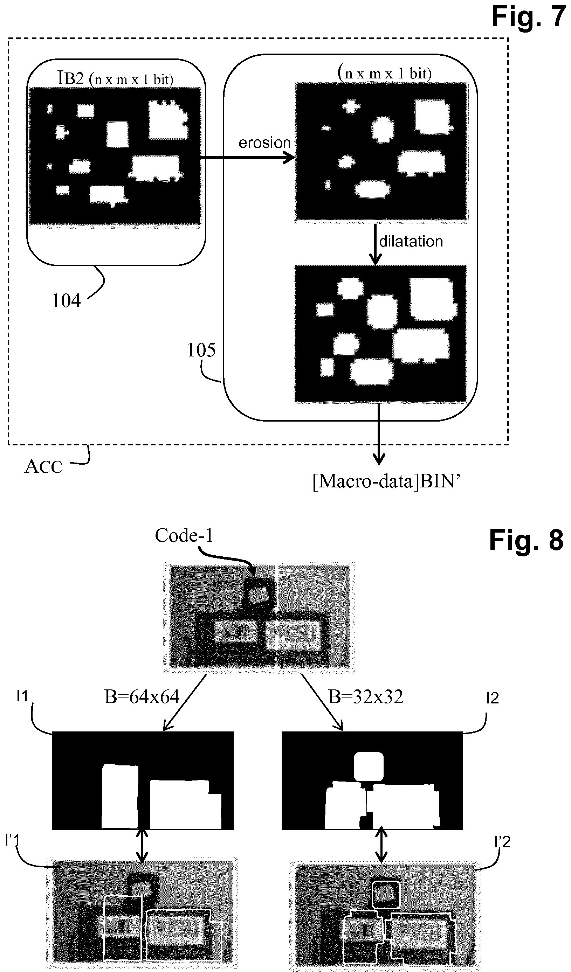

Dans un perfectionnement illustré à la figure 7, on applique une étape supplémentaire 105 de calcul morphologique, comprenant une érosion suivie d'une dilatation, permettant d'améliorer le contenu signifiant de la macro-image binaire IB2. Ces opérations d'érosion puis dilatation s'opèrent sur chaque point de la macro-image IB2, sur la base du même ensemble de pixels de voisinage, où le voisinage est délimité par une structure appelée élément structurant. L'élément structurant est adapté aux critères géométriques du ou des codes à détecter. Par exemple, l'élément structurant, centré sur le pixel, a une forme en croix et les paramètres sont notamment la largeur et la longueur des branches (nombre de pixels). La figure 7 rend compte des améliorations sur l'image : les formes des boîtes blanches sont mieux définies ; et du bruit a été éliminé.

Au final, le processus de calcul mis en œuvre dans le capteur d'image permet d'obtenir une petite image au contenu signifiant sur la localisation des codes dans l'image de capture, et qui peut être transmise dans le pied de trame de transmission d'image, à la suite des données d'image de capture. Ces données de localisation sont directement exploitables par le système externe de reconnaissance de code, qui peut alors focaliser ses algorithmes de traitement d'image sur la ou les zones d'image de capture identifiées dans la macro-image comme contenant de l'information haute fréquence.

La figure 8 permet d'expliquer en quoi la taille de pavé pour l'opération 103 est un critère de performance du processus d'extraction mis en œuvre dans l'invention. On montre une image de capture qui comprend trois codes 1D, dont l'un est plus petit que les autres, noté Code-1, et qui dans l'exemple est orienté en diagonale, contrairement aux deux autres codes, sensiblement orientés horizontalement. On note au passage que dans cet exemple, si pour les deux codes alignés à l'horizontal, le calcul de gradient vertical ne donnera aucune information intéressante. Il en va différemment pour le petit code "Code-1", du fait de son orientation en diagonale.

Par ailleurs, si on utilise un pavé B de taille plus grande que ce petit code, par exemple 64x64, on voit sur l'image I1 qui correspond à la petite image binaire obtenue en sortie du processus 100 (après l'étape 104 ou après l'étape 105), que le petit code Code-1 n'a pas été localisé. L'image I'1 simule une superposition de l'information de la petite image I1 sur l'image de capture I0. Avec un pavé B plus petit, dans l'exemple 32x32, on voit que le petit code est bien localisé (image I2 et I'2).

Le processus 100 de calcul de la macro-image mis en œuvre par le circuit de traitement numérique 7 qui vient d'être décrit, se déroule de façon synchrone avec la lecture (l'acquisition) des données d'image de capture par le circuit de lecture 4, pour traiter les données des lignes de pixels une à une, en séquence. C'est-à-dire que le circuit de traitement numérique 7 est cadencé (Figure 1) comme la matrice de pixel, le circuit de lecture et le circuit d'interface I/O par les signaux d'horloge de synchronisation trame Fsync (nouvelle image), de synchronisation ligne Lsync (nouvelle ligne) et d'horloge pixel Clkₚₓ (pixel suivant).

A chaque nouvelle trame (Fsync), le circuit de traitement numérique est réinitialisé ; notamment la mémoire de ligne M_{L} et le registre d'accumulation Acc sont remis à zéro. Ensuite, les étapes 101 à 103, 101 à 104 ou 101 à 105, du processus se déroulent, au fur et à mesure de la disponibilité des valeurs intervenant dans chaque calcul, pour chaque pixel, de façon glissante en x et en y (Figure 5), à la cadence de l'horloge pixel.

La trame d'image correspondante est illustrée à la figure 3 qui montre de manière schématique comment la petite image est en effet calculée de façon synchrone et au fur et à mesure, pour constituer les données Macro-data dans le registre accumulateur Acc. Ces données Macro-data sont intégrées dans le pied de trame, à la suite des données d'images DATA-Lᵢ transmises dans le corps de trame.

Le processus de calcul qui vient d'être décrit, pour l'extraction d'une signature haute fréquence de l'image de capture, peut s'appliquer de la même manière pour extraire d'autres signatures spatiales (de répétition, de direction...etc.). Pour un même objet, si on effectue plusieurs prises d'image successives, on peut ainsi calculer différentes signatures spatiales, sur tout ou partie de l'image, ce qui permet d'enrichir l'information de localisation par passes successives. En particulier, on peut réaliser une capture d'image en zoomant (utilisation d'une lentille grossissante du système optique du lecteur de code intégrant le capteur) sur une partie de la scène qui correspond à une région d'intérêt déterminée à partir de la petite image extraite sur l'image complète, et on peut obtenir une signature spatiale plus précise, basée sur d'autres critères géométriques. Pour prendre un exemple numérique : si la taille d'un code dans une image de capture prise pour une distance de capture donnée, occupe 256 sur 256 pixels, dans la macro-image on obtiendra une boite "blanche" correspondante qui ne fera pas plus de 4 sur 4 pixels, mais qui donne bien une information de localisation (position et taille dans l'image de capture). Le système de reconnaissance peut commander une deuxième prise d'image avec un zoom sur la région d'intérêt correspondante, pour obtenir des informations spatiales plus précises, sur des critères de haute fréquence spatiale comme décrit précédemment ou sur d'autres critères géométriques de code.

A chaque fois, cela reste un calcul de filtre (ou des calculs de filtres en parallèle). Ce qui change, ce sont les masques de convolution utilisés, c'est-à-dire les coefficients des filtres, et éventuellement la taille de masque (5x5 par exemple au lieu de 3x3). On peut donc aisément prévoir dans le capteur, une mémoire de masques [a]ₖ et pour une prise d'image donnée, on sélectionne un ou des masques de convolution dans cette mémoire. Egalement les différents seuils du processus, à savoir Vs1, Vs2 et la valeur q de troncature peuvent être paramétrés, ainsi que les dimensions de pavé B. Cela peut être fait de différentes façons, par une valeur de pointeur pour une mémoire de paramètres correspondants (mémoire de masques par exemple), ou par la valeur elle-même du paramètre. L'homme du métier sait comment implémenter cela en pratique. Le capteur comprend alors des paramètres correspondants dans un ou des registres de paramètres (registre 5, Figure 1).

## Revendications

1. Capteur d'image CMOS configuré pour réaliser une prise d'image, sur commande externe (Trig), et transmettre en sortie, vers un système de reconnaissance optique de code, les données d'image de capture dans une trame d'image correspondante (DATA-OUT), le capteur d'image intégrant sur une même puce de circuit intégré, une matrice (1) de pixels comportant de N lignes et M colonnes et un circuit de lecture séquentiel (4) des N lignes de pixels de la matrice,
dans lequel
le capteur intègre en outre un circuit de traitement numérique (7) configuré pour calculer une macro-image et la transmettre en pied de ladite trame d'image (DATA-OUT), ladite macro-image étant telle que chaque point de macro-image correspond à un pavé (B) de points de l'image de capture, le calcul de la macro-image comprenant au moins
- pour chaque pixel de la matrice :
une première étape (101) de calcul d'au moins une première valeur numérique (VF) par application d'un filtre (F_{CV}) pour obtenir une information de haute fréquence, le calcul étant effectué de façon synchrone avec l'acquisition par le circuit de lecture séquentiel (4), ladite première valeur numérique étant codée sur le même nombre de bits (r) que lesdites pixels ;
- une deuxième étape (102) de binarisation (BIN1) de la première valeur numérique, établissant une première valeur binaire (VB1) pour chaque pixel de la matrice ; et
- pour chaque pavé (B) de pixels de la matrice
- une troisième étape (103) de calcul d'une deuxième valeur numérique (VΣ) par sommation desdites premières valeurs binaires (VB1) des pixels du pavé concerné dans un registre d'accumulation à Q=b1+b2 bits de sortie, ou b1 et b2 définissant le nombre n=2^{b1} de lignes de pixels du pavé et le nombre m=2^{b2} de colonnes de pixels du pavé, n et m entiers supérieurs à 1.

2. Capteur d'image selon la revendication 1, dans lequel la deuxième valeur numérique est une valeur codée sur q bits (VΣ_{q}), où q=1 à Q.

3. Capteur d'image selon la revendication 1 ou 2, dans lequel le processus de calcul (100) comprend une quatrième étape (104) de binarisation (BIN2) de ladite deuxième valeur numérique.

4. Capteur d'image selon la revendication 3, dans lequel le processus de de calcul (100) comprend une cinquième étape (104) de traitement morphologique par érosion puis dilatation qui est appliqué sur les valeurs binaires établies par la quatrième étape.

5. Capteur d'image selon l'une des revendications 1 à 4, comportant une mémoire de masques de convolution paramétrables.

6. Capteur d'image selon l'une des revendications 1 à 5, dans lequel la première valeur numérique établie dans ladite première étape est la valeur absolue du résultat du calcul de filtre.

7. Capteur d'image selon l'une des revendications 1 à 5, dans lequel ladite première étape de calcul applique en parallèle au moins un calcul de gradient horizontal et un calcul de gradient vertical sur les données d'image de capture dudit pixel et desdits pixels voisins, et la première valeur numérique (VF) est la somme des valeurs absolues desdits gradients calculés.

8. Capteur d'image selon l'une des revendications 1 à 5, configuré pour appliquer dans ladite première étape (101) un calcul de filtre parmi au moins un filtre de la liste suivante : un calcul de filtre haute fréquence non directionnel combinant un ou plusieurs calculs de gradient, un calcul de gradient dans une direction déterminée, un filtre correspondant à des caractéristiques spatiales représentatives d'un type de code.

9. Capteur d'image selon la revendication 8, dans lequel le capteur est configuré pour appliquer un premier filtre de calcul de ladite liste sur les données d'une première image de capture d'un objet cible, et un autre filtre de calcul différent du premier sur les données d'une deuxième image de capture du même objet cible.

10. Capteur d'image selon la revendication 9, dans lequel la deuxième image de capture correspond à un zoom sur une région d'intérêt déterminée à partir de la macro-image calculée sur les données de la première image decapture.

11. Capteur d'image selon l'une quelconque des revendications 1 à 10, dans lequel la taille de pavé de pixels est fonction de la taille de code(s) dans l'image de capture.

12. Capteur d'image selon la revendication 11, dans lequel la taille de pavé est paramétrable.

13. Capteur d'image selon l'une quelconque des revendications 1 à 12, dans laquelle les étapes de binarisation utilisent une valeur de seuil respective (Vs1, Vs2), paramétrable.

14. Capteur d'image selon l'une quelconque des revendications 1 à 13, dans laquelle une information de haute fréquence est une signature haute fréquence.

## Patentansprüche

1. CMOS-Bildsensor, der konfiguriert ist, um auf externen Befehl (Trig) hin eine Bildaufnahme durchzuführen und die Bilddaten der Aufnahme in einem entsprechenden Bildframe (DATA-OUT) an ein optisches Zeichenerkennungssystem auszugeben, wobei der Bildsensor auf einem einzigen integrierten Schaltkreis-Chip eine Matrix (1) von Pixeln integriert, mit N Zeilen und M Spalten und eine sequenzielle Leseschaltung (4) der N Pixelzeilen der Matrix,
wobei der Sensor ferner eine digitale Verarbeitungsschaltung (7) beinhaltet, die konfiguriert ist, um ein Makrobild zu berechnen und es am Fuß des Bildframes (DATA-OUT) zu übertragen, wobei das Makrobild derart ist, dass jeder Punkt des Makrobilds einem Block (B) von Punkten des Aufnahmebilds entspricht, die Berechnung des Makrobilds mindestens umfassend
- für jedes Pixel der Matrix:
einen ersten Schritt (101) eines Berechnens mindestens eines ersten numerischen Werts (VF) durch Anwenden eines Filters (Fcv), um Hochfrequenzinformationen zu erlangen, wobei das Berechnen synchron mit dem Erfassen durch die sequentielle Leseschaltung (4) erfolgt, wobei der erste numerische Wert mit derselben Anzahl von Bits (r) kodiert ist wie die Pixel;
- einen zweiten Schritt (102) eines Binarisierens (BIN1) des ersten numerischen Werts, was für jedes Pixel der Matrix einen ersten Binärwert (VB1) ermittelt; und
- für jeden Block (B) von Pixeln der Matrix
- einen dritten Schritt (103) eines Berechnens eines zweiten numerischen Werts (VΣ) durch Summieren der ersten Binärwerte (V_{B}1) von Pixeln des jeweiligen Blocks in einem Akkumulationsregister mit Q=b1+b2 Ausgangsbits, wobei b1 und b2 die Anzahl n=2^{b1} von Pixelzeilen des Blocks und die Anzahl m=2^{b2} von Pixelspalten des Blocks definieren, wobei n und m ganze Zahlen größer als 1 sind.

2. Bildsensor nach Anspruch 1, wobei der zweite numerische Wert ein Wert ist, der auf q Bits (VΣ_{q}) kodiert ist, wobei q = 1 bis Q.

3. Bildsensor nach Anspruch 1 oder 2, wobei der Berechnungsprozess (100) einen vierten Schritt (104) eines Binarisierens (BIN2) des zweiten numerischen Werts umfasst.

4. Bildsensor nach Anspruch 3, wobei der Berechnungsprozess (100) einen fünften Schritt (104) eines morphologischen Verarbeitens durch Erosion und anschließende Dilatation umfasst, der auf die im vierten Schritt ermittelten Binärwerte angewendet wird.

5. Bildsensor nach einem der Ansprüche 1 bis 4, mit einen Speicher für parametrierbare Faltungsmasken.

6. Bildsensor nach einem der Ansprüche 1 bis 5, wobei der in dem ersten Schritt ermittelte erste numerische Wert der Absolutwert des Resultats der Filterberechnung ist.

7. Bildsensor nach einem der Ansprüche 1 bis 5, wobei der erste Berechnungsschritt parallel mindestens eine horizontale Gradientenberechnung und eine vertikale Gradientenberechnung auf die Aufnahmebilddaten des Pixels und der benachbarten Pixel anwendet und der erste numerische Wert (VF) die Summe der Absolutwerte der berechneten Gradienten ist.

8. Bildsensor nach einem der Ansprüche 1 bis 5, der konfiguriert ist, um in dem ersten Schritt (101) eine Filterberechnung mindestens eines Filters aus der folgenden Liste anzuwenden: eine Berechnung eines ungerichteten Hochfrequenzfilters, die eine oder mehrere Gradientenberechnungen kombiniert, eine Gradientenberechnung in einer bestimmten Richtung, einen Filter, der räumlichen Merkmalen entspricht, die repräsentativ für einen Codetyp sind.

9. Bildsensor nach Anspruch 8, wobei der Sensor konfiguriert ist, um einen ersten Berechnungsfilter der Liste auf die Daten eines ersten Aufnahmebilds eines Zielobjekts und einen weiteren, von dem ersten verschiedenen Filter auf die Daten eines zweiten Aufnahmebilds desselben Zielobjekts anzuwenden.

10. Bildsensor nach Anspruch 9, wobei das zweite Aufnahmebild einer Vergrößerung eines bestimmten Bereichs von Interesse entspricht, der anhand des Makrobilds bestimmt, das aus den Daten des ersten Aufnahmebilds berechneten wird.

11. Bildsensor nach einem der Ansprüche 1 bis 10, wobei die Größe des Pixelblocks von der Größe des/der Code(s) in dem Aufnahmebild abhängt.

12. Bildsensor nach Anspruch 11, wobei die Blockgröße parametrierbar ist.

13. Bildsensor nach einem der Ansprüche 1 bis 12, wobei die Binarisierungsschritte jeweils einen parametrierbaren Schwellenwert (Vs1, Vs2) verwenden.

14. Bildsensor nach einem der Ansprüche 1 bis 13, wobei Hochfrequenzinformationen eine Hochfrequenzsignatur sind.

## Claims

1. CMOS image sensor configured to take an image, on external command (Trig), and transmit as output, to an optical code recognition system, the capture image data in a corresponding image frame (DATA-OUT), the image sensor integrating on one same integrated circuit chip, a matrix (1) of pixels comprising N lines and M columns and a sequential reading circuit (4) of the N lines of pixels of the matrix,
wherein the sensor further incorporates a digital processing circuit (7) configured to compute a macro-image and transmit it at the footer of said image frame (DATA-OUT), said macro-image being such that each macro-image point corresponds to a tile (B) of points of the capture image, the computation of the macro-image comprising at least
- for each pixel of the matrix:
one first step (101) of computing at least one first digital value (VF) by applying a filter (Fcv) to obtain high-frequency information, the computation being performed synchronously with the acquisition by the sequential reading circuit (4), said first digital value being encoded on the same number of bits (r) as said pixels;
- one second step (102) of binarising (BIN1) the first digital value, establishing a first binary value (VB1) for each pixel of the matrix; and
- for each tile (B) of pixels of the matrix
- one third step (103) of computing a second digital value (VΣ) by summing said first binary values (VB1) of the pixels of the tile in question in an accumulation register at Q=b1+b2 output bits, or b1 and b2 defining the number n=2^{b1} of lines of pixels of the tile and the number m=2^{b2} of columns of pixels of the tile, n and m integers greater than 1.

2. Image sensor according to claim 1, wherein the second digital value is a q-bit encoded value (VΣ_{q}), where q=1 to Q.

3. Image sensor according to claim 1 or 2, wherein the computing process (100) comprises a fourth step (104) of binarising (BIN2) said second digital value.

4. Image sensor according to claim 3, wherein the computing process (100) comprises a fifth step (104) of morphological processing by erosion, then expansion which is applied to the binary values established by the fourth step.

5. Image sensor according to any one of claims 1 to 4, comprising a memory of configurable convolution masks.

6. Image sensor according to any one of claims 1 to 5, wherein the first digital value established in said first step is the absolute value of the result of the filter computation.

7. Image sensor according to one of claims 1 to 5, wherein said first computing step applies in parallel at least one horizontal gradient computation and one vertical gradient computation to the capture image data of said pixel and said neighbouring pixels, and the first digital value (VF) is the sum of the absolute values of said computed gradients.

8. Image sensor according to any one of claims 1 to 5, configured to apply in said first step (101), a filter computation from at least one filter from among the following list: a non-directional high-frequency filter computation combining one or more gradient computations, a gradient computation in a determined direction, a filter corresponding to spatial features representative of a type of code.

9. Image sensor according to claim 8, wherein the sensor is configured to apply a first computation filter of said list to data of a first capture image of a target object, and another computation filter different from the first computation filter to data of a second capture image of the same target object.

10. Image sensor according to claim 9, wherein the second capture image corresponds to a magnification on a region of interest determined from the macro-image computed on the data of the first capture image.

11. Image sensor according to any one of claims 1 to 10, wherein the pixel tile size is a function of the code size(s) in the capture image.

12. Image sensor according to claim 11, wherein the tile size is configurable.

13. Image sensor according to any one of claims 1 to 12, wherein the binarisation steps use a respective, configurable threshold value (Vs1, Vs2).

14. Image sensor according to any one of claims 1 to 13, wherein high-frequency information is a high-frequency signature.
